# EUROPEAN PATENT SPECIFICATION

(11) **EP 4 371 415 B1**
(45) Date of publication and mention of the grant of the patent: **23.09.2026**
(21) Application number: 22208630.8
(22) Date of filing: 21.11.2022
(51) Int. Cl.: A23B 2/20

(54) **METHOD AND SYSTEM FOR PREPARING A FOOD PRODUCT**
VERFAHREN UND SYSTEM ZUR HERSTELLUNG EINES LEBENSMITTELPRODUKTS
PROCÉDÉ ET SYSTÈME DE PRÉPARATION D'UN PRODUIT ALIMENTAIRE

(43) Date of publication of application: 22.05.2024
(73) Proprietor: MicVac AB, 421 31 Västra Frölunda (SE)
(72) Inventor: ALBINO, Robert, 41133 Göteborg (SE)
(74) Representative: Zacco Sweden AB

(56) References cited:
- SE-A1- 1 350 794
- US-A1- 2006 076 069
- US-A1- 2009 035 425
- US-A1- 2012 009 308
- US-A1- 2016 355 287

## Description

### TECHNICAL FIELD

The present invention relates to food products, in particular the present invention relates to method for preparing a food product. The present invention also relates to a system for preparing a food product.

### BACKGROUND

A growing trend in the world is the consumption of so called ready-to-eat food, i.e. food which does not need cooking or has already been cooked. Such meals are either frozen or refrigerated in order to have a reasonable long shelf life. Generally, one can say that frozen food has the drawback of being less tasty, having worsened texture when thawed, and looking less appetizing with impressive shelf life, while refrigerated food generally appears more appetizing it comes at the cost of considerably shorter shelf life. In order to prolong the shelf life for such refrigerated ready-to-eat food pasteurisation is often used. Conventionally, the process of pasteurisation is combined with a removal of oxygen from the interior of the food package in order to minimise bacterial growth, for instance by replacement of the oxygen by injection of some other suitable food preservation gas into the food package.

In a cooking and pasteurisation method used by the applicant the food is placed in a food package comprising a container having a covering, for example, in the form of a see-through thin film, which is sealed along the container edges to create an interior compartment which is completely sealed off from the surroundings. Further, a one-way valve may be provided in the covering. The one-way valve may be arranged to be automatically opened when an overpressure reaches above a certain threshold within the food package. Such overpressures are e.g. created when the package is positioned in a microwave oven and the food product is cooked by exposing it to electromagnetic radiation. It may also be created through convection in e.g. furnaces with air heating and steam, or by exposing the package to thermal radiation, e.g. through infra-red radiation. During the cooking of the food product a large amount of steam is created. The steam is building up the overpressure such that the valve is opening and letting both oxygen and steam out. When the food has been cooked the microwave heating or other heating source are shut off, whereby the steam generation stops. The one-way valve is then designed to close almost immediately due to the reduction of internal overpressure and the lowering of temperature. The food packages are cooled to a suitable storing temperature and may be delivered to retailers for later use. In general, these one-way valves open at a relative overpressure, in the order of 100 hPa, as compared to those used, for instance, in connection with packages for coffee, which may have one-way valves that open at relative overpressures in the range of 1 hPa to 10 hPa. The term relative overpressure is here to be construed as how much the pressure inside the food package exceeds the pressure outside of the food package, i.e. the difference between the internal and the external pressure.

A general problem with many of the one-way valves suitable for food packages that are known today is that the associated manufacturing processes are relatively complex with a multitude of process steps and parameters that need to be continuously adjusted in order to reduce waste.

Accordingly, there is need to provide more efficient methods for sealing food packages. There is further a need to reduce costs and/or environmental foot print associated with the food packages. There is also a need to provide efficient methods for sealing a food product to allow for efficient production of food packages.

US 2016/355287 A1 which forms the basis for the preamble of the independent claims discloses a magnetron control system for controlling a set of magnetrons of a thermal processing tunnel. In more detail, US 2016/355287 A1 discloses a magnetron actuation scheme, which includes some type of configuration to cause at least one of the plurality of magnetrons to have a different execution characteristic than at least one other magnetron of the plurality of magnetrons. Accordingly, an instruction, in accordance with the actuation scheme, is sent to a signal controller that drives the plurality of magnetrons, thereby causing the plurality of magnetrons to execute in accordance with the preconfigured magnetron actuation scheme. US 2012/009308 A1 discloses a method for preserving food. The food is heated in a moist state in a container, which has a venting opening and is suited as transport and retail packaging, by way of microwaves (M) for a limited time, however at least until hot steam (D) forms in the container and exits through the venting opening. After the heating has ended, a gas (G) is injected into the container using a cannula, and a container wall made of a plastic

film is pierced with the cannula. The plastic film that is used has a thickness of less than 100 µm. At least one layer of the plastic film is made of polyethylene terephthalate having a thickness of greater than 19 µm.

US 2009/035425 A1 discloses a method and device for subjecting a packaged food product to a heat treatment, such as pasteurization, whereby the product is brought up to the treatment temperature by radiating it with microwaves and then cooling it down. The method is characterized in that the cooling process takes place in a conditioned gas environment and in that the package is hereby provided with an opening. The method provides for a packaged food product with an improved storage life.

SE 1 350 794 discloses a system and package for food products which comprises a tray and a cover film which comprises an opening for venting of gas at overpressure that arises when cooking a food product contained in the package during supply of microwaves at a power P, wherein the opening has an opening area A adapted such that the ratio between the opening area and the supplied effect is in the range of 0,005 and 0,06mm2/W, preferably between 0,01 and 0,03 mm2/W, more preferably between 0,015 and 0,025 mm2/W, so that the opening has a sufficiently large opening area A that it allows a sufficient flow of gas during cooking to avoid that the package breaks due to overpressure, and so that the opening area A is sufficiently small to maintain an overpressure in the package during a time period after the supply of microwave power has ceased, which time period allows the package to be sealed in a subsequent processing step. Further there is described a method for packaging of food products.

### SUMMARY

It is therefore an object of the present invention to provide a system and a method for preparing a food product, which alleviate all or at least some of the drawbacks of presently known solutions.

This object is achieved by means of a system and a method for preparing a food product as defined in the appended independent claims. The term exemplary is in the present context to be understood as serving as an instance, example or illustration.

According to a first aspect of the present invention, there is provided a method for preparing a food product. The method comprises heating a food package enclosing the food product. The food package comprises a container and a covering. The heating starts or continues a cooking process for the food product and the cooking process causes a steam generation and a steam condensation within the food package. The covering has a venting opening for release of excess steam caused by the steam generation. The method further comprises reducing the heating of the food package thereby reducing the steam generation, and applying a label to seal the venting opening thereby sealing the food product from the ambient atmosphere surrounding the food package. The label is applied within a time window, TL, spanning in time between a threshold point, TTP, at which the release of excess steam through the venting opening is at or below a maximum threshold value and a balancing point TBP, at which the steam generation is balanced by the steam condensation such that the release of excess steam through the venting opening is at or above a minimum threshold value.

An advantage of the method is that a robust process for sealing of the food package is provided. In more detail, the method allows for an efficient sealing of the venting opening of the food package by taking advantage of the progression of the steam generation and the steam condensation occurring during the cooking of the food product. Put differently, the method allows for efficient sealing of the food package within the time window, TL. The application of the label within the time window, TL, mitigates a build-up of a too high pressure within the food package which may break the food package. Leakage at and/or breakage of the label may further be mitigated. To this end, constraints pertaining to the choice of label material and/or the adhesive for the fastening the label to the covering may further be reduced. A simple and more cost-effective sealing of the food package may thereby be used. A reduced need for complex labels may further be achieved. A method for production of food packages that is simpler to scale may also be achieved. An increased sustainability may further be obtained.

The application of the label within the time window, TL, further prevents an introduction of ambient gas from the surrounding to enter into the food package. Put differently, the sealing occurs when there is an overpressure within the food package. Contaminations from the surrounding may thereby be prevented from entering into the food package. A food product with longer shelf life may thereby be provided.

The wording cooking is in the present context to be construed broadly. The cooking may be understood as a process using heat to prepare a food for consumption. The cooking may comprise pasteurization and/or sterilization of the food by heat exposure. The cooking may comprise a pasteurization process in which the food product is heated, usually to less than 100 °C, to eliminate pathogens and extend the shelf life of the food product.

For the purpose of the present disclosure, the wording reducing, in reference to the heating, is to be construed broadly. The reducing may accordingly comprise a reduction in heat from a first temperature to a second temperature, the second temperature being lower than the first temperature. The reducing may comprise reducing the heating to zero. At zero heating it is to be understood that no heating energy is provided to the food package. It should be noted that there may be an ambient temperature in the surroundings of the food package. The reducing may be abrupt or ramped down. The ramping may be gradual. Alternatively, the reducing of the heating may be achieved by removing the food package from a heating area. The food package may be on a conveyor belt, the conveyor belt moving the food package out of the heating area. Reducing the heating may in some example be referred to as a terminating the heating. The reducing of the heating may in other examples be referred to as a ceasing of the heating.

The wording steam may comprise water in the gas phase. The steam may be water vapour. The steam may be understood as a mixture of vapour and aerosols of liquid water vapour. Steam may be understood as the vapour obtained by heating a substance at boiling temperature. The steam may comprise gases and/or vapour originating from the food product when heated. The steam may comprise gas originating from within the food package.

The wording steam generation is in the present context to be understood as the steam generated within the food package by the heating of the food product. The steam generation may increase the pressure inside the food package. The steam generation may create an overpressure within the food package. The steam generation may inflate the food package. Excess steam may further exit through the venting opening thereby reducing the pressure in the food package.

The wording steam condensation is in the present context to be understood as the process by which steam in the food package changes into liquid. Put differently, water vapour inside the container may condensate. The condensation may reduce the pressure inside the food package. The volume of the steam within the food package may be reduced by the steam condensation.

The wording maximum threshold value is in the present context to be understood as the value at which the label may be efficiently attached to the covering. For a value larger than the maximum threshold the flow out of the venting opening may be too large for attaching the label to the covering. A larger value may alternatively cause the food package to break. Put differently, the maximum threshold value may pertain to the maximum pressure value at which the food package is prevented from rupturing due to overpressure created inside the food package. To this end, it may be avoided that the label breaks due to tension in the film or that the adhesion of the label to the covering is damaged. The sealing between the covering and the container may thereby be maintained intact. The sealing between the covering and the container may, by way of example withstand a pressure of about 150 mbar to 200 mbar. The pressure within the food package may in some examples be in the range 10 mbar to 100 mbar. According to other examples, the adhesion of the label to the covering may withstand a pressure of about 30 mbar. In such an example, the venting opening may be selected to have an opening size reducing the pressure within the food package to below the 30 mbar. The sealing within the time window, TL, further mitigates that a remaining pressure pertaining to the steam generation within the food package may break the food package. The sealing of the food package may thereby be maintained.

The wording minimum threshold value is in the present context to be understood as a value at which there is still an overpressure in the package such that an inflow of gas from the surrounding is prevented.

The magnitude of steam generation over time may be determined based on a first predefined function and wherein the magnitude of steam condensation over time may be determined based on a second predefined function. An improved determining of the time window, TL, suitable for applying the label may thereby be obtained.

The balancing point, TBP, may occur when the first predefined function and the second predefined function has a non-zero common solution. An improved determining of the time window, TL, suitable for applying the label may thereby be obtained.

The method may further comprise subjecting the food package to a cooling process such that the steam condensation is increased, the cooling process thereby shifting the balancing point, TBP, in time to occur in time at a cooling point TCP, being earlier in time than the balancing point TBP. An improved tuning of the time window TL for applying the label is thereby provided. A reduction of built up pressure in the food package may further be achieved. The wording earlier may be construed as earlier in time, wherein the time is measured from the reducing of the heating.

The cooling may be applied to the outer surface of the covering thereby efficiently cooling the vapour within the container. The cooling allows for an earlier application of the label. The cooling further allows for an improved determining of the suitable time for sealing. The cooling process may be understood as an assisted cooling further allowing for the tuning of the time window, TL, for the sealing of the venting opening and thereby the food package. The cooling process may comprise exposing the food package to a cooling gas. The cooling gas may be applied to the covering. The cooling gas may be air or gas from a controlled gas supply.

The method may comprise cooling the food package after the label has been applied. The cooling may increase the steam condensation. A reduction in pressure within the food package may thereby be obtained.

The cooling process may influence the second predetermined function such that the non-zero common solution with the first predetermined function occurs in time at the cooling point, TCP, being earlier in time than the balancing point TBP. An improved tuning of the time window, TL, for applying the label may thereby be provided.

The method may further comprise subjecting the food package to an additional heating process prior to the applying of the label.

The additional heating process may shift the balancing point, TBP, in time to occur at a heating point in time, THP, being later than the balancing point, TBP.

The additional heating process may influence the first predetermined function such that the non-zero common solution with the second predetermined function may occur in time at a heating point, THP, being later than the balancing point, TBP. The wording later may be construed as later in time, wherein the time is measured from the reducing of the heating.

The additional heating may allow for tuning of the point in time at which the time window, TL, for applying the label occurs. The time window, TL, for sealing the venting opening may be extended. The pressure within the container may further be controlled via the heating. The additional heating may increase the steam generation. The pressure inside the container may be increased.

The method may further comprise measuring, by means of a sensing device, the magnitude of steam generation over time; and measuring, by means of the sensing device, the magnitude of steam condensation over time.

The sensing device may comprise a first sensor configured to monitor the magnitude of steam generation, and a second sensor configured to monitor the magnitude of steam condensation.

The method may further comprise determining based on the measured magnitude of steam generation and the measured magnitude of steam condensation over time the respective first predefined function and the second predefined function. An improved determining of the time window, TL, suitable for applying the label may thereby be obtained.

The first sensor may be configured to measure a magnitude of steam generation, and a second sensor may be configured to measure a magnitude of steam condensation.

The first sensor may be configured to measure a magnitude of steam generation over time, and a second sensor may be configured to measure a magnitude of steam condensation over time.

The opening size of the venting opening may be within a range of 1 mm² to 8 mm², preferable within a range of 2 mm² to 4 mm² and most preferable between a range of 3 mm² to 4 mm².

The opening size may thereby be sufficiently small to maintain an overpressure within the food package, but to allow for an efficient release of excess steam caused by the steam generation. Breakage of the food package may thereby be prevented. The food package may thereby be prevented from bursting. Put differently, the excess steam may be understood as the amount of steam generated within the food package that may be released due to the overpressure caused within the food package. The opening size may be referred to as an opening area.

The balancing point, TBP, may be shifted in time by a selecting of an opening size of the venting opening.

The venting opening may comprise a flap overhanging a portion the periphery of the venting opening. An advantage being that the flap provides an adjustable opening having an effective opening size that is a function of the flow of steam through the venting opening. The wording flap may be construed as a flexible protrusion extending at least partly over the venting opening. The flap may thereby cover at least a portion of the venting opening.

The opening size may thus be varied during the food preparation. The opening size may be larger when the steam generation is larger, e.g. when the heating is applied to the food product and smaller when the heating is reduced. The opening size may be larger in the beginning of the cooking process and smaller at the end of the cooking process. The flap may be a cut out in the covering. With increased flow of steam out of the food package the flap is lifted and the effective opening size of the opening may be increased.

The venting opening may have an adjustable opening size, the adjustable opening size being provided by a covering comprising at least a portion of expandable film, wherein the venting opening is arranged in the expandable film, and wherein expandable film expands in response to an overpressure caused by the steam generated by the heating. The expandable film may in response to the increased pressure inside the food package stretch outwardly such that a larger opening is provided. The expandable film may at least partially recover the shape after a reduction in pressure inside the food package.

According to a second aspect of the present invention, there is provided a system for preparing a food product. The system comprises heating means configured to heat a food package containing the food product. The food package comprises a container and a covering. The heating starts or continues a cooking process of the food product. The cooking process causes a steam generation and a steam condensation within the food package. The covering has a venting opening for release of excess steam caused by the steam generation. The system further comprises a label application arrangement configured to apply a label on the covering so that the label covers the venting opening thereby sealing the food product from the ambient atmosphere surrounding the food package. The label is applied within a time window, TL, spanning in time between a threshold point, TTP, at which the release of excess steam through the venting opening is at or below a maximum threshold value, and a balancing point, TBP, at which the steam generation is balanced by the steam condensation such that the release of excess steam through the venting opening is at or above a minimum threshold value. With this second aspect of the invention, similar advantages and preferred features are present as in the previously discussed first aspect of the invention.

The heating means may be a microwave source for heating a food product. Alternately, the heating means may be an infrared (IR) source, a convection heater or a steam generator.

The heating of the food package may be achieved by using microwave power to heat the food package. Alternately the heating of the food package may be by using infrared (IR) power to heat the food package, using a convection heater to heat the food package; or using steam to heat the food package.

The system may further comprise a cooling device. The cooling device may be configured to cool the food package, thereby subjecting the food package to a cooling process such that the steam condensation is increased, the cooling process thereby shifting the balancing point, TBP, in time to occur in time at a cooling point TCP, being earlier in time than the balancing point TBP.

The system may further be configured to subjecting the food package to an additional heating process prior to the applying of the label. The additional heating process may be achieved by the heating means. The additional heating means may be a microwave source for heating a food product.

The additional heating process may be achieved by an additional heating element. The additional heating element may comprise a heating filament. The additional heating element may be configured to provide heat by radiation heating. The additional heating element may be an infrared emission source. The additional heating element may be a microwave source.

The system may further comprise a sensing device for measuring the magnitude of steam generation over time and for measuring the magnitude of steam condensation over time.

The sensing device may comprise a first sensor configured to monitor the magnitude of steam generation, and a second sensor configured to monitor the magnitude of steam condensation.

The method may further comprise calibrating the steam generation and the steam condensation over time. The sensing device may be configured to determine the magnitude of steam generation and steam condensation over time such that the first and second predefined function may be determined respectively.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the invention will appear from the following detailed description, reference being made to the accompanying drawings, in which:
Figs. 1a to 1c are schematic views of a food product being prepared according to some embodiments.
Fig. 2 is a schematic view of a method for preparing the food product according to some embodiments.
Figs. 3a to 3c are schematic views of a food product being prepared according to some embodiments.
Fig. 4 is a schematic diagram illustrating the steam generation and steam condensation, S, as function of time, t, according to some embodiments of the method for preparing a food product.
Fig. 5 is a schematic diagram illustrating the steam generation and steam condensation, S, as function of time, t, according to some embodiments of the method for preparing a food product.
Fig. 6 is a schematic illustration of a system for preparing a food product according to some embodiments.
Figs. 7a to 7d are schematic illustrations of venting opening of a covering according to some embodiments.

### DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

In the following description of exemplary embodiments, the same reference numerals denote the same or similar components. It will be understood that, although the term first, second, etc. may be used herein to describe various elements, these elements should not be limited by these terms. These terms are only used to distinguish one element from another.

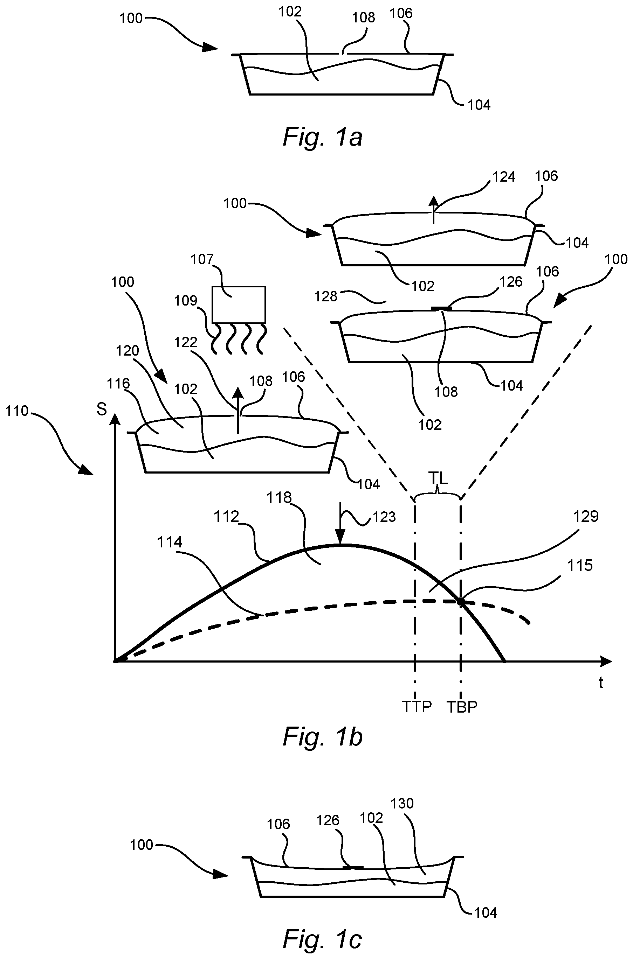

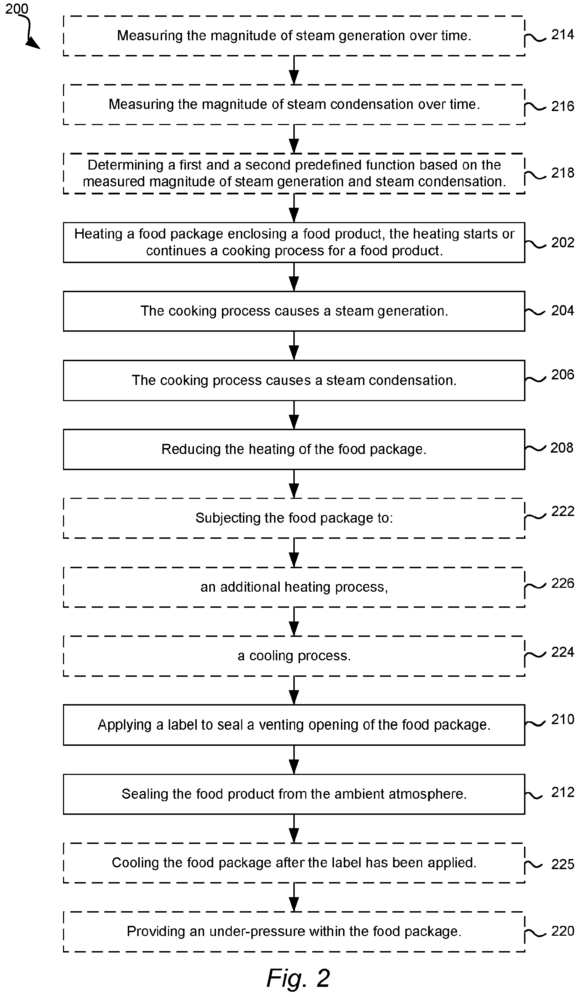

Figs. 1a to 1c are schematic views of a food product being prepared according to some embodiments. Fig. 2 is a schematic view of a method for preparing the food product according to some embodiments. With reference to Figs. 1a to 1c and Fig. 2, a process for preparing the food product is described in accordance with some embodiments. Fig. 1a illustrates a food package 100. The food product 102 is placed in the food packages 100. In more detail, the food package 100 encloses a food product 102. The food package 100 comprises a container 104 and a covering 106. The container 104 and the covering 106 are arranged to enclose the food product 102. The covering 106 comprises a venting opening 108 for the release of excess steam generated within the food package 100.

Fig. 1b further illustrates the food package 100 during the preparing of the food product 102. The method 200 for preparing the food product 102 comprises heating 202 the food package 100. The heating 202 starts or continues a cooking process for the food product 102. The heating 202 may cause a pasteurization of the food product. The heating 202 may induce a boiling of the food product 102. The heating 202 may induce a heating to 100 °C of the food product 102. The heating 202 may be below 100 °C, to eliminate pathogens and extend the shelf life of the food product 102. The heating 202 may be induced by heating means 107. The heating means 107 may be configured to heat a food package 100 containing the food product 102. The heating means 107 may be a microwave source 109. The microwave source 109 may be configured to heat a food product 102. The heating 202 may be arranged to heat the food product 102 to a boiling point of the food product 102. The boiling point may change with the surrounding pressure. The boiling point may depend on the food product. The heating temperature may, for example, be in the range of 80 °C to 120 °C.

The cooking process induced by the heating 202 causes a steam generation 204 and a steam condensation 206 within the food package 100. The diagram 110 of Fig. 1b illustrates, by way of example, the generation 204 of steam and condensation 206 of steam, S, as function of time, t. The magnitude of steam generation over time is illustrated in the diagram 110 by the steam generation function 112, see the solid curve. The magnitude of steam condensation over time is illustrated in the diagram 110 by the steam condensation function 114, see the dashed curve. The steam generation 204 and the steam condensation 206 influence a pressure 116 in the food package, illustrated by area 118 in the diagram 110. In other words, the pressure 116 may be described by the area 118 formed between the steam generation function 112 and the steam condensation function 114. The larger the pressure 116 within the food package 100, the larger the area 118 is correspondingly.

The pressure 116 may form an overpressure 120 in the food package. The overpressure being caused by the steam generation 204 during the heating of the food package 100. The overpressure 120 may inflate the covering 106 such that the volume inside the food package 100 is increased. The covering 106 may form a convex shape. The food package 100 may release excess steam through the venting opening 108, as illustrated by an arrow 122 in Fig. 1b. The pressure 116 within the food package 100 may thereby be regulated.

The method 200 may further comprise reducing 208 the heating 202 of the food package 100. The reducing 208 is indicated by the arrow 123 in Fig. 1b. The generation 204 of steam is thereby reduced, as also illustrated in the diagram 110. A reduced flow of steam through the venting opening 108 may thereby be obtained, as illustrated by the arrow 124 being smaller than the arrow 122 in Fig. 1b. A reduced pressure within the food package 100 is further obtained by reducing 208 the heating 202.

The method 200 further comprises applying 210 a label 126 to seal the venting opening 108 thereby sealing 212 the food product 102 from the ambient atmosphere 128 surrounding the food package 100.

The label 126 is applied 210 within a time window, TL, spanning in time. The time window, TL, is illustrated by the area 129 within the dot dashed lines in the diagram 110. The time window, TL, spanning in time between a threshold point, TTP, at which the release of excess steam 124 through the venting opening 108 is at or below a maximum threshold value and a balancing point, TBP, at which the steam generation 204 is balanced by the steam condensation 206 such that the release of excess steam 124 through the venting opening 108 is at or above a minimum threshold value. In other words, in some embodiments, the method comprises applying 210 a label 126 to seal the venting opening 108 during a time window spanning in time between a first point in time at which a gas flow out of the food package 100 has fallen below a threshold value and a point in time before the gas flow out of the food package 100 is negative. Stated differently, the label 126 is applied when the gas flow (e.g. litres/minute) is higher than zero but lower than a threshold value.

An advantage of the method is that a robust process for sealing of the food package is provided. In more detail, the method allows for an efficient sealing of the venting opening of the food package by taking advantage of the changes in the steam generation and the steam condensation occurring during the cooking of the food product. Put differently, the method allows for efficient sealing of the food package within the time window, TL. The application of the label 126 within the time window, TL, method mitigates a build-up of a too high pressure within the food package 100 which may break the food package. Leakage at and/or breakage of the label 126 may further be mitigated. To this end, constraints pertaining to the choice of label material and/or the adhesive for the fastening the label 126 to the covering 106 may further be reduced. A simple and more cost-effective sealing of the food package may thereby be obtained. A reduced need for complex labels may further be obtained.

With further reference to the diagram 110 in Fig. 1b, the magnitude of steam generation over time may be determined based on a first predefined function. The steam generation function 112 may be the first predefined function. The magnitude of steam condensation over time may be determined based on a second predefined function. The steam condensation function 114 may be the second predefined function. The first function may for example be approximated numerically by fitting a function to a series of data points obtained from measuring a flow of steam through the venting opening 108 by means of a suitable flow sensing device while the food package 100 is heated at one or more specific temperatures over time. As the steam generation will depend on a number of parameters (type of food product in the container, geometry of the container, temperature, etc. one may obtain different functions for different "scenarios". Similarly, the second predefined function may be approximated numerically by fitting a function to a series of data points obtained from measuring the amount of steam that condensates in an experimental setup.

The balancing point, TBP, may occur when the first predefined function 112 and the second predefined function 114 has a non-zero common solution 115.

The method 200 may further comprise measuring 214, by means of a sensing device, the magnitude of steam generation over time; and measuring 216, by means of the sensing device, the magnitude of steam condensation over time.

The sensing device may comprise a first sensor configured to monitor the magnitude of steam generation, and a second sensor configured to monitor the magnitude of steam condensation.

The method may further comprise determining 218 based on the measured magnitude of steam generation and the measured magnitude of steam condensation over time the respective first predefined function and the second predefined function. An improved determining of the time window, TL, suitable for applying the label may thereby be obtained.

Fig. 1c illustrates the food package 100 after the label 126 has been applied to cover the venting opening 108 thereby sealing the food package 100. The food package 100 may cool down after the sealing. The cooling down may be to the ambient temperature surrounding the food package 100. As the container cools, steam therein may condense, whereupon an under-pressure 130 may arise inside the container. The method 200 may therefore be understood to provide 220 an under-pressure within the food package 100. The under-pressure 130 may be referred to as a "vacuum". The method 200 for preparing the food product 102 may be understood to comprise a cooking and vacuum packing in the same food package 100. The method 200 may therefore provide a food product 102 that is a cooked, pasteurized and vacuum packed. The under-pressure 130 may deflate the covering 106 such that the volume inside the food package 100 is decreased. The covering 106 may form a concave shape as indicated in Fig. 1c.

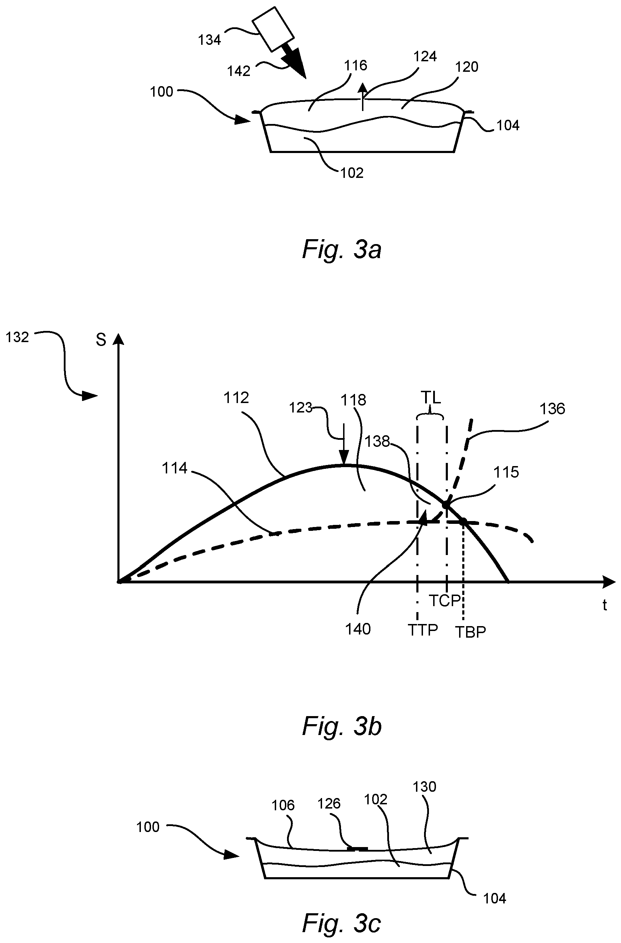

The method 200 for preparing the food product 102 may further comprise subjecting 222 the food package to a cooling process 224, as illustrated in Fig 2. Figs. 3a to 3c are schematic perspective views of a food product being prepared according to some embodiments. Fig. 3a illustrates the food package 100 during the preparing of the food product 102 and a diagram 132 illustrates, by way of example, the generation 204 and condensation 206 of steam, S, as function of time, t. The magnitude of steam generation over time is illustrated in the diagram 132 by the steam generation function 112, see the solid curve. The magnitude of steam condensation over time is illustrated in the diagram 132 by the steam condensation function 114, see the dashed curve. The steam generation 204 and the steam condensation 206 may create a pressure 116 in the food package 102, illustrated as by area 118 in the diagram 132. The pressure 116 may be an overpressure 120, the overpressure 120 being caused by the steam generation 204 during the heating of the food package 100. The overpressure 120 may inflate the covering 106 such that the volume inside the food package 100 is increased. The covering may form a convex shape. The venting opening 108, however, may release excess steam, illustrated by the arrow 124, through the venting opening 108, as discussed in relation to Fig. 1b.

The cooling process 224 may be provided by a cooling device 134. The cooling process 224 induces an increase in steam condensation 206. This is illustrated in Fig. 3b by a cooling modified steam condensation function illustrated by the dashed curve 136. As illustrated in Fig. 3b, the cooling process 224 thereby shifts the balancing point, TBP, in time to occur in time at a cooling point TCP. The cooling point TCP occurs earlier in time than the balancing point TBP. The wording earlier should here be construed as being earlier in time as measured from the reducing 208 of the heating. The reducing 208 of the heating is indicated by the arrow 123 in Fig. 3b. An improved tuning of the time window, TL, for applying the label is thereby provided. A reduction in pressure 116 in the food package 100 may further be provided. Put differently, the pressure 116 within the food package 100 may thereby be efficiently regulated by the cooling process 224.

In other words, the cooling process 224 may influence the second predetermined function such that the non-zero common solution 115 with the first predetermined function occurs in time at the cooling point, TCP, being earlier in time than the balancing point TBP. An improved tuning of the time window, TL, for applying the label is thereby provided. The improved tuning of the time window, TL, may further be understood by comparing in Fig. 3b the area 138 within the time window, TL, that is enclosed by the steam generation function 112 and the modified steam condensation function 136 with the full area 140 formed by the steam generation function 112 and the steam condensation function 114 when not subjected to the cooling process 224. The lower pressure caused by the cooling process 224 corresponds to the area 138 being smaller than the area 140 pertaining to a situation without the cooling process.

The cooling process 224 may comprise exposing the food package for a cooling gas 142 as illustrated in Fig. 3a. The cooling gas may be applied to the covering 106. The cooling gas 142 may be air or a gas from a controlled gas supply.

The cooling process 224 may be subjected 222 before applying 210 the label 126. The cooling process 224 may alternatively be subjected 222 to the food package 100 during the applying 210 the label 126.

The cooling process 224 may be applied to the outer surface of the covering thereby efficiently cooling the vapour within the food package 100. The cooling process 224 may allow for an earlier application 210 of the label 126. The cooling further allows for an improved determining of the suitable time for sealing 212.

The method 200 may comprise cooling 225 the food package after the label has been applied. A reduced pressure within the food package may thereby be obtained. The cooling may increase the condensation of steam within the food package 100. A reduction in pressure within the food package 100 may be obtained.

Fig. 3c illustrates the food package 100 after the label 126 has been applied 210 to cover the venting opening 108 thereby sealing 212 the food package 100. The food package 100 may cool down after the sealing 212. The cooling down may be to the ambient temperature surrounding the food package 100. As the food package cools, steam therein may condense, whereupon an under-pressure 130 may arise inside the food container.

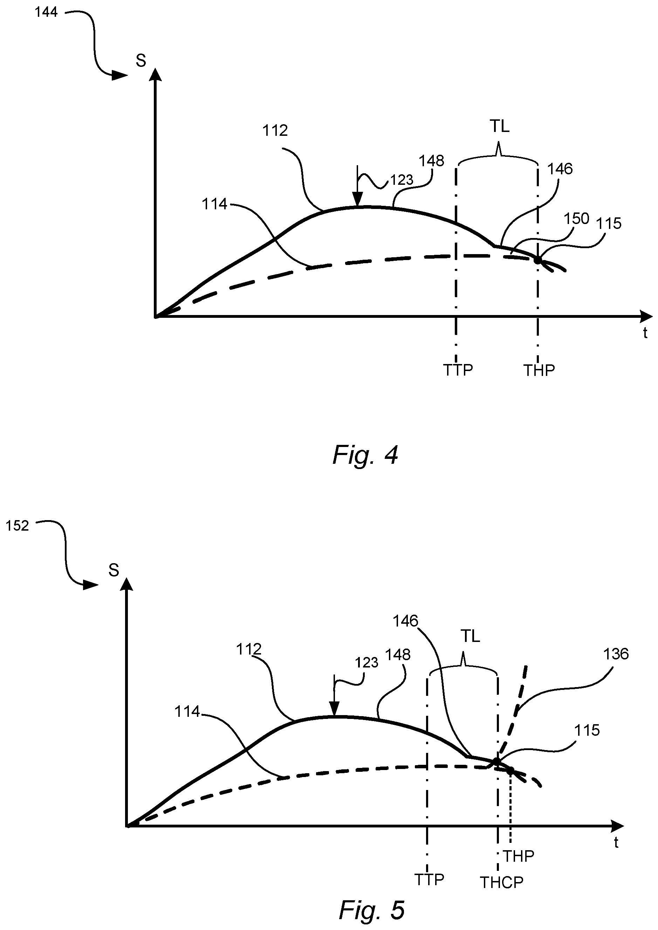

Fig. 4 is illustrating a schematic diagram 144 showing the steam generation and steam condensation, S, as function of time, t, according to an example of the method 200 for preparing a food product. With reference to Fig. 2 and Fig. 4, the method 200 may further comprise subjecting 222 the food package to an additional heating process 226 prior to the applying 210 of the label 126. The additional heating process 226 may shift the balancing point, TBP, in time to occur at a heating point in time, THP, being later than the balancing point, TBP, as illustrated in Fig 4. The wording later pertains to the heating point, THP, occurring at a later time than, TBP, as measured from the reducing 208 of the heating, indicated in Fig. 4 by the arrow 123. The additional heating process 226 being applied later in time than the heating 202 pertaining to the cooking of the food product. The additional heating process 226 may be understood to take place in time after the reducing 208 of the heating 202. The additional heating applied may be reduced in power from a heating power for starting or continuing a cooking process for the food product to a lower power for the additional heating. The additional heating process 226 may be caused by a reduced heating. Put differently, the heating may be continuing over time but reduced in heating power over time. According to an example the additional heating may be in the range 20 % to 5 % of the heating power used for starting or continuing the cooking the food product. According to one example the heating may be 10% of the heating power for starting or continuing the cooking. The reducing of the heating power may be a gradual or stepwise lowering of the heating power. The reduction in heating power may be a reduction in heating temperature. The additional heating process may therefore be achieved by the heating means used for the heating. The heating means may be a microwave source for heating a food product. Alternatively, the additional heating process may be achieved by an additional heating element. The additional heating element may comprise a heating filament. The additional heating element may be configured to provide heat by radiation heating. The additional heating element may be an infrared emission source.

In Fig. 4 it is further illustrated that the additional heating process 226 may influence the first predetermined function such that the non-zero common solution 115 with the second predetermined function may occur in time at a heating point, THP, being later than the balancing point, TBP. Put differently the steam generation function 112 may be modified by the additional heating process as illustrated by the tail 146 of the modified steam generation function 148. The time window, TL, is thereby extended in time by the additional heating process 226. Thus, the additional heating process 226 may allow for tuning of the point in time at which the time window, TL, for applying the label occurs. The time window, TL, for sealing the venting opening may be extended. The pressure within the container may further be controlled via the heating, as illustrated by the area 150. The additional heating process 226 may increase the steam generation 204. The pressure inside the food package may be increased by the additional heating process 226.

Fig. 5 is illustrating a schematic diagram 152 showing the steam generation and steam condensation, S, as function of time, t, according to some embodiments of the method 200 for preparing a food product 100. As exemplified in Fig.5, the method 200 may comprise subjecting 222 the food package to an additional heating process 226 and a cooling process 224. The cooling process 224 may be applied during the additional heating process 226 as illustrated in Fig. 5. The combined additional heating process 226 and the cooling process 224 allows for a shifting of the balancing point, TBP, in time to a combined heating and cooling point, THCP. The combined heating and cooling point, THCP, occurring earlier in time than the heating point, THP, resulting from a pure additional heating process as described above. Put differently, the combined heating and cooling may result in a modified steam generation 148 and a modified steam condensation function 136. The wording earlier should here be construed as being earlier in time as measured from the reducing 208 of the heating, indicated by the arrow 123 in Fig. 5. An improved control of the pressure within the food package may thereby be obtained. An improved tuning of the time window, TL, for applying the label is further provided.

The method 200 may further comprise cooling 125 the food product 100 after the applying 210 of the label 126. The cooling 125 is illustrated by the increase in steam condensation 136.

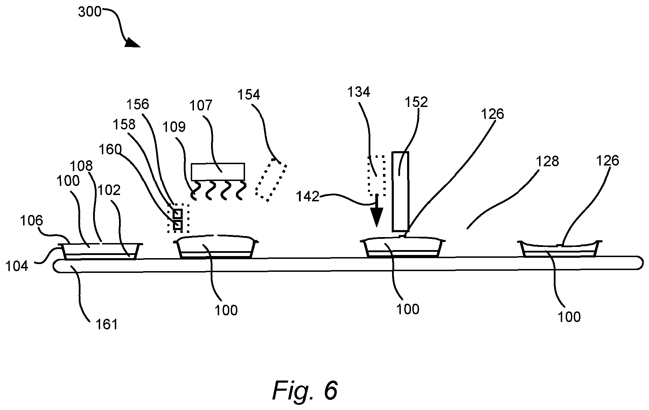

Fig. 6 is a schematic illustration of a system 300 for preparing a food product according to some embodiments. Fig. 6 illustrates a food package 100 comprising the food product 102 at different points in time when transported within the system 300. The system 300 comprising: heating means 107 configured to heat a food package 100 containing the food product 102.

The heating means 108 may be a microwave source 109. The food package 100 comprises a container 104 and a covering 106. The heating starts or continues a cooking process of the food product 102 as discussed above. The cooking process causes a steam generation and a steam condensation within the food package 100. The covering 106 has a venting opening 108 for release of excess steam caused by the steam generation. The system 300 further comprises a label application arrangement 152 configured to apply a label 126 on the covering 106 so that the label 126 covers the venting opening 108 thereby sealing the food product 102 from the ambient atmosphere 128 surrounding the food package 100. Put differently, the food package is thereby sealed. The label 126 is further applied within a time window, TL, spanning in time between a threshold point, TTP, at which the release of excess steam through the venting opening 108 is at or below a maximum threshold value, and a balancing point, TBP, at which the steam generation is balanced by the steam condensation such that the release of excess steam through the venting opening is at or above a minimum threshold value as have been discussed above.

The label 126 may be an adhesive label. The label 126 may comprise a layer with barrier properties such as polypropylene, for limiting transportation of oxygen from the surroundings into the food package 100.

The container may be flexible. The container may be a plastic container. The plastic container may be a flexible plastic container.

The food product 102 is not intended to be limited to any particular form or type of food. The method for preparing a food product may for instance be applicable to meat, fish, vegetables and/or seafood. The food product may, in other examples, be in the form of ready-to-eat meals.

The heating means 107 may be a microwave source for heating a food product 108. The microwave power used for the microwave source may, by way of example, be in the range of 400 W to 1000 W for the heating of the food package. The microwave power used for the heating may vary within the heating tunnel. The microwave power may vary over time. A larger microwave power may be used to induce a boiling of the food product.

The system may further comprise a cooling device 134. The cooling device 134 being configured to cool the food package 100, thereby subjecting the food package to a cooling process such that the steam condensation is increased, the cooling process thereby shifting the balancing point, TBP, in time to occur in time at a cooling point TCP, being earlier in time than the balancing point TBP. The cooling device 134 may comprise a gas outlet. The cooling device 134 may further be configured to expose the food package 100 for a cooling gas 142 as illustrated in Fig. 3a. The cooling gas 142 may be applied to the covering 106. The cooling gas 142 may be air or gas from a controlled gas supply.

The system 300 may further be configured to subjecting the food package to an additional heating process prior to the applying of the label. The additional heating process may be achieved by the heating means 107. The heating means may be a microwave source for heating a food product. The additional heating process may alternatively be achieved by an additional heating element 154. The additional heating element 154 may comprise a heating filament. The additional heating element 154 may be configured to provide heat by radiation heating. The additional heating element 154 may be an infrared emission source.

With further reference to Fig. 6 and Fig. 2, the system may further comprise a sensing device 156 for measuring 214 the magnitude of steam generation over time and for measuring 216 the magnitude of steam condensation over time. The sensing device 156 may comprise a first sensor 158 configured to monitor the magnitude of steam generation, and a second sensor 160 configured to monitor the magnitude of steam condensation. The reduction in heating may be caused by the transportation of the food package 100 out of a heating tunnel, the heating tunnel being arranged to heat the food product.

The sensing device 156 may comprise a control system configured to determine the magnitude of steam generation over time and the magnitude of steam condensation over time based on measuring sensor data. The sensor data may pertain to pressure and/or flow data. The sensing device may comprise a pressure sensor. The pressure sensor may be a steam pressure transmitter. The sensing device may comprise a moisture sensor configured to detect steam emitted from the food product. The sensing device may comprise a humidity sensor. The sensing device may comprise a weight sensor configured to measure a quantity of steam generated and/or a quantity of steam condensed. The sensing device may comprise a sensor for determining a liquid level within the food package. The sensing device may comprise a flow sensor. The first and/or second sensor may be a pressure sensor, a flow sensor or a humidity sensor.

The food package 100 may be positioned on a conveyor belt 161. The food product 100 may be transported through a heating tunnel during the heating of the food package 100.

The time window during which the label 126 is applied may be in the range of 2 to 20 seconds. The additional heating may further increase the time window.

The covering is here exemplified as a film. The film may be an extruded film. The covering may in other examples be a lid. The container is here exemplified as a tray. The container may in other examples be, for example, a can. The container and the covering may be of the same material. The container and covering may in other examples form a bag. Thus, the container and the covering may be formed jointly. The bag may be referred to as a food packaging bag. The container and the covering may form a pouch. The pouch may be a stand-up pouch.

The covering may comprise a ductile material such as a polyamide. The covering may further comprise a barrier material, such as polypropylene and/or polyamide. The barrier material may act as a barrier material to prevent diffusion of oxygen into the food package. The covering may further comprise a material which is suitable for being attached to the container by heating or welding. Examples of such materials may be polypropylene or polyethylene, depending on the material used in the container. The covering may further be sealed to the container at joint around the edge of the container. The covering may be in the form of a laminate. The laminate may comprise layers of polyamide and as polypropylene. The covering may be arranged on the container such that the polypropylene layer is arranged closer to the interior or the container than the polyamide layer.

The venting opening may have an opening size within a range of 1 mm² to 8 mm², preferable within a range of 2 mm² to 4 mm² and most preferable between a range of 3 mm² to 4 mm². The opening size may thereby be sufficiently small to maintain an overpressure within the food package but to allow for an efficient release of excess steam caused by the steam generation. Breakage of the food package may thereby be prevented. A larger opening may reduce the pressure inside the food package. The balancing point, TBP, may further be shifted in time by a selecting of the opening size of the venting opening. The wording opening may be construed as a trough-hole.

The label 126 may in some examples be an adhesive label.

The label 126 may in some examples be a one-way valve. The one-way valve may be configured to open when a pressure inside the food package exceeds a pressure threshold value generated by a post heating of the food package, for example, when heating the sealed food product for consumption. The method 200 may reduce the demands on the one-way valve. A less complex one-wave valve may be used.

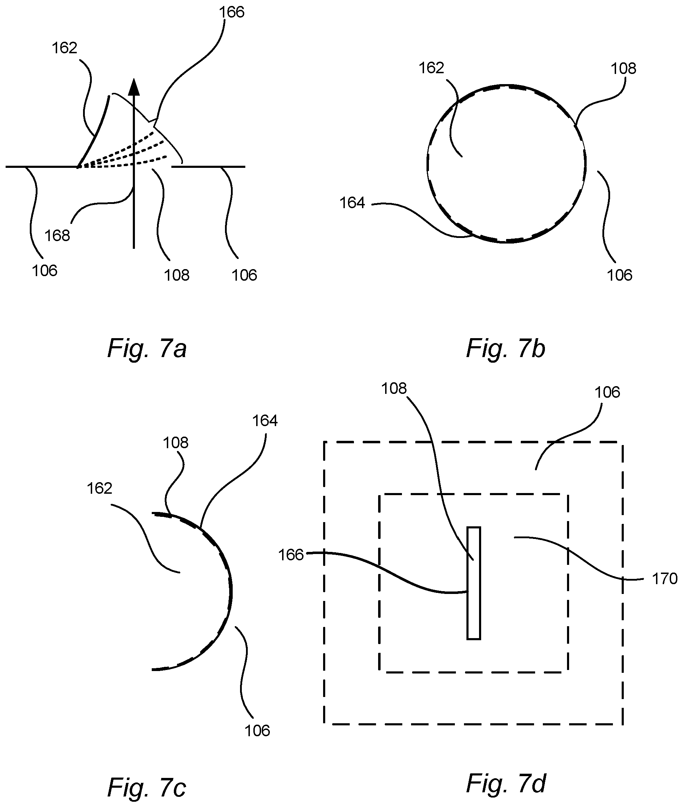

Figs. 7a to 7d are schematic illustrations of the venting opening of the covering 106 according to some embodiments. Figs. 7a to 7c illustrate that the venting opening 108 may comprise a flap 162. Fig. 7a is a schematic side view of the venting opening and Figs. 7b and 7c are schematic top views of the venting opening 108 according to two examples. The flap 162 comprising an extension overhanging a portion of the periphery 164 of the venting opening 108. The flap may have an extension such that the flap at least covers a portion of the venting opening 108. The flap 162 may completely cover the venting opening 108. Put differently the flap 162 may cover at least a portion of the venting opening 108. The flap 162 may form a part of the covering 106. The flap may overlap with the venting opening. Alternatively, a layer may be attached to the covering, the layer comprising the flap, such that at least a portion of the flat overlaps with the venting opening.

An advantage being that the flap 162 provides an adjustable opening size 166 having an effective opening size that is a function of the flow of steam 168 through the venting opening 108. Put differently, the effective opening area of the venting opening may vary with the flow of steam. Fig. 7b illustrates a flap 162 having a circular shape. In Fig. 7c an alternative flap 162 is illustrated. The flap 162 in Fig. 7c has a half circular shape, also referred to as a semicircle. It may be noted that the flap may have alternative shapes such as a rectangular, triangular or elliptical shape according to other embodiments.

The flap provides an adjustable opening having an effective opening size that is a function of the pressure, i.e. the flow of steam through the venting opening. The opening may have a half circle shape. The opening may have a circle shape. The opening may have a rectangle shape.

The opening size may thus be varied during the food preparation process. The opening size may be larger when the steam generation is larger, e.g. when the heating is applied to the food product and smaller when the heating is reduced. The opening size of the venting opening may be larger in the beginning of the cooking process and smaller at the end of the cooking process. In other words, a possible solution is to have a flap cut out in the lid film. With increased flow of steam out of the food package the flap is lifted and the effective opening size of the venting opening is increased. The balancing point, TBP, may further be shifted in time by a changing of the opening size of the venting opening. The venting opening may be formed in the covering prior to the covering being attached to the container. The venting opening may be formed in the covering when the food product is heated. The venting opening may be formed in an inflated food product. The steam generation may inflate the food product. In some examples the container and covering may jointly form a pouch, the pouch comprising the food product. The venting opening may further be formed in the pouch when heated. The pouch may thereby be inflated by the steam generation prior the formation of the venting opening. The food package may alternatively be a bag and the venting opening may be formed in the bag when heated.

The method may further comprise forming a venting opening in the covering during the heating of the food product. A covering having the venting opening may thereby be provided. The forming of the venting opening may provide a flap.

Fig. 7d illustrates another venting opening having and adjustable opening size 166. The adjustable opening size 166 being provided by a covering 106 comprising at least a portion of expandable film 170, wherein the venting opening 108 is arranged in the expandable film, and wherein the expandable film 170 expands in response to an overpressure 120 caused by the steam generated by the heating. The expandable film 170 may in response to the increased pressure inside and outward from the food package stretch such that a larger opening size is provided. Put differently, the area of the venting opening may increase. The expandable film 170 may at least partially recover the shape after the reduced heating. The deformation of the expandable film 170 in response to the increased pressure inside the food package may be an elastic deformation. The expandable film 170 may be an elastic film.

The venting opening in the expandable film may be a slit. The slit may have an extension within a range of 1 mm to 8 mm, preferable within a range of 2 mm to 4 mm and most preferable between a range of 3 mm to 4 mm.

The venting opening may be formed in the covering by perforation of the covering with a sharp and smooth tool, preferably needle-shaped. The venting opening may alternatively be formed by means of laser cutting, punching or melting. The opening may be provided at a central portion of the covering. Thereby it may be achieved that the venting opening, when the covering is pointing upwards relative to the bottom of the container, to the overpressure caused by the cooking forms a highest point of the food package, such that steam may efficiently flow out of the venting opening.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method for preparing a food product, the method (200) comprising:
heating (202) a food package (100) enclosing the food product (102), the food package (100) comprising a container (104) and a covering (106), wherein the heating (202) starts or continues a cooking process for the food product (102) and wherein the cooking process causes a steam generation (204) and a steam condensation (206) within the food package (100), the covering (106) having a venting opening (108) for release of excess steam caused by the steam generation (204);
reducing (208) the heating (202) of the food package (100) thereby reducing the steam generation (204); and
applying (210) a label (126) to seal the venting opening (108) thereby sealing (212) the food product (102) from the ambient atmosphere (128) surrounding the food package (100), **characterized in that** the label (126) is applied within a time window, TL, spanning in time between a threshold point, TTP, at which the release of excess steam through the venting opening (108) is at or below a maximum threshold value and a balancing point TBP, at which the steam generation (204) is balanced by the steam condensation (206) such that the release of excess steam through the venting opening (108) is at or above a minimum threshold value.

2. The method according to claim 1, wherein the magnitude of steam generation (204) over time is determined based on a first predefined function and wherein the magnitude of steam condensation (206) over time is determined based on a second predefined function.

3. The method according to claim 2, wherein the balancing point, TBP, occurs when the first predefined function and the second predefined function has a non-zero common solution (115).

4. The method according to any one of claims 1 to 3, the method (200) further comprising subjecting (222) the food package (100) to a cooling process (224) such that the steam condensation (206) is increased, the cooling process (224) thereby shifting the balancing point, TBP, in time to occur in time at a cooling point, TCP, being earlier in time than the balancing point, TBP.

5. The method according to claim 4, when dependent on claim 3, wherein the cooling process (224) influences the second predetermined function such that the non-zero common solution (115) with the first predetermined function occurs in time at the cooling point, TCP, being earlier in time than the balancing point, TBP.

6. The method according to any one of claims 1 to 5, the method (200) further comprising subjecting (222) the food package (100) to an additional heating process (226) prior to the applying (210) of the label (126).

7. The method according to claim 6, wherein the additional heating process (226) shifts the balancing point, TBP, in time to occur at a heating point in time, THP, being later than the balancing point, TBP.

8. The method according to claim 6, when dependent on claim 3, wherein the additional heating process (226) influences the first predetermined function such that the non-zero common solution (115) with the second predetermined function occurs in time at a heating point, THP, being later than the balancing point, TBP.

9. The method according to anyone of claims 1 to 8, further comprising:
measuring (214), by means of a sensing device (156), the magnitude of steam generation over time; and measuring (216), by means of the sensing device (156), the magnitude of steam condensation over time.

10. The method according to claim 9, wherein the sensing device (156) comprises: a first sensor (158) configured to monitor the magnitude of steam generation, and a second sensor (160) configured to monitor the magnitude of steam condensation.

11. The method according to any one of the claims 1 to 10, wherein the opening size of the venting opening (108) is within a range of 1 mm² to 8 mm², preferable within a range of 2 mm² to 4 mm² and most preferable between a range of 3 mm² to 4 mm².

12. The method according to any one of the claims 1 to 11, wherein the balancing point, TBP, is shifted in time by a selecting of an opening size of the venting opening (108).

13. The method according to any one of claims 1 to 12, wherein the venting opening (108) comprises a flap (162) overhanging a portion of the periphery (164) of the venting opening (108).

14. The method according to any one of claims 1 to 12, wherein the venting opening (108) has an adjustable opening size (166), the adjustable opening size (166) being provided by a covering (106) comprising at least a portion of expandable film (170), wherein the venting opening (108) is arranged in the expandable film (170), and wherein the expandable film (170) expands in response to an overpressure (120) caused by the steam generated by the heating (202).

15. A system for preparing a food product, the system (300) comprising:
heating means (107) configured to heat (202) a food package (100) containing the food product (102), wherein the food package (100) comprises a container (104) and a covering (106), wherein the heating (202) starts or continues a cooking process of the food product (102), and wherein the cooking process causes a steam generation (204) and a steam condensation (206) within the food package (100); the covering (106) having a venting opening (108) for release of excess steam caused by the steam generation (204);
a label application arrangement (152) configured to apply (210) a label (126) on the covering (106) so that the label (126) covers the venting opening (108) thereby sealing (212) the food product (102) from the ambient atmosphere (128) surrounding the food package (100), **characterized in that** the label (126) is applied within a time window, TL, spanning in time between a threshold point, TTP, at which the release of excess steam through the venting opening (108) is at or below a maximum threshold value, and a balancing point, TBP, at which the steam generation (204) is balanced by the steam condensation (206) such that the release of excess steam through the venting opening (108) is at or above a minimum threshold value.

## Patentansprüche

1. Verfahren zum Herstellen eines Lebensmittelprodukts, wobei das Verfahren (200) Folgendes umfasst:
Erhitzen (202) einer Lebensmittelverpackung (100), die das Lebensmittelprodukt (102) umschließt, wobei die Lebensmittelverpackung (100) einen Behälter (104) und eine Abdeckung (106) umfasst, wobei das Erhitzen (202) einen Garprozess für das Lebensmittelprodukt (102) einleitet oder fortsetzt und wobei der Garprozess eine Dampferzeugung (204) und eine Dampfkondensation (206) innerhalb der Lebensmittelverpackung (100) bewirkt, wobei die Abdeckung (106) eine Entlüftungsöffnung (108) zum Ablassen von überschüssigem Dampf, der durch die Dampferzeugung (204) verursacht wird, aufweist;
Verringern (208) des Erhitzens (202) der Lebensmittelverpackung (100), wodurch die Dampferzeugung (204) verringert wird; und
Anbringen (210) eines Etiketts (126) zum Abdichten der Entlüftungsöffnung (108), wodurch das Lebensmittelprodukt (102) gegenüber der Umgebungsatmosphäre (128), die die Lebensmittelverpackung (100) umgibt, abgedichtet wird (212), **dadurch gekennzeichnet, dass** das Etikett (126) innerhalb eines Zeitfensters, TL, angebracht wird, das sich zeitlich zwischen einem Schwellenpunkt, TTP, an dem das Ablassen von überschüssigem Dampf durch die Entlüftungsöffnung (108) bei oder unter einem oberen Schwellenwert liegt, und einem Ausgleichspunkt, TBP, an dem die Dampferzeugung (204) durch die Dampfkondensation (206) ausgeglichen wird, erstreckt, sodass das Ablassen von überschüssigem Dampf durch die Entlüftungsöffnung (108) bei oder über einem unteren Schwellenwert erfolgt.

2. Verfahren nach Anspruch 1, wobei das Ausmaß der Dampferzeugung (204) im Zeitverlauf basierend auf einer ersten vordefinierten Funktion bestimmt wird und wobei das Ausmaß der Dampfkondensation (206) im Zeitverlauf basierend auf einer zweiten vordefinierten Funktion bestimmt wird.

3. Verfahren nach Anspruch 2, wobei der Ausgleichspunkt, TBP, auftritt, wenn die erste vordefinierte Funktion und die zweite vordefinierte Funktion eine gemeinsame Lösung (115) ungleich Null aufweisen.

4. Verfahren nach einem der Ansprüche 1 bis 3, wobei das Verfahren (200) ferner Unterziehen (222) der Lebensmittelverpackung (100) einem Kühlprozess (224) umfasst, sodass die Dampfkondensation (206) verstärkt wird, wodurch der Kühlprozess (224) den Ausgleichspunkt, TBP, zeitlich so verschiebt, dass er zeitlich an einem Kühlpunkt, TCP, auftritt, der zeitlich vor dem Ausgleichspunkt, TBP, liegt.

5. Verfahren nach Anspruch 4, sofern von Anspruch 3 abhängig, wobei der Kühlprozess (224) die zweite vorbestimmte Funktion derart beeinflusst, dass die gemeinsame Lösung (115) ungleich Null mit der ersten vorbestimmten Funktion zeitlich an dem Kühlpunkt, TCP, auftritt, der zeitlich vor dem Ausgleichspunkt, TBP, liegt.

6. Verfahren nach einem der Ansprüche 1 bis 5, wobei das Verfahren (200) ferner Unterziehen (222) der Lebensmittelverpackung (100) einem zusätzlichen Erhitzungsprozess (226) vor dem Anbringen (210) des Etiketts (126) umfasst.

7. Verfahren nach Anspruch 6, wobei der zusätzliche Erhitzungsprozess (226) den Ausgleichspunkt, TBP, zeitlich so verschiebt, dass er zu einem Erhitzungszeitpunkt, THP, auftritt, der nach dem Ausgleichspunkt, TBP, liegt.

8. Verfahren nach Anspruch 6, sofern von Anspruch 3 abhängig, wobei der zusätzliche Erhitzungsprozess (226) die erste vorbestimmte Funktion derart beeinflusst, dass die gemeinsame Lösung (115) ungleich Null mit der zweiten vorbestimmten Funktion zeitlich an einem Erhitzungspunkt, THP, auftritt, der nach dem Ausgleichspunkt, TBP, liegt.

9. Verfahren nach einem der Ansprüche 1 bis 8, ferner umfassend:
Messen (214), mittels einer Erfassungsvorrichtung (156), des Ausmaßes der Dampferzeugung im Zeitverlauf; und Messen (216), mittels der Erfassungsvorrichtung (156), des Ausmaßes der Dampfkondensation im Zeitverlauf.

10. Verfahren nach Anspruch 9, wobei die Erfassungsvorrichtung (156) Folgendes umfasst:
einen ersten Sensor (158), der dazu konfiguriert ist, das Ausmaß der Dampferzeugung zu überwachen, und einen zweiten Sensor (160), der dazu konfiguriert ist, das Ausmaß der Dampfkondensation zu überwachen.

11. Verfahren nach einem der Ansprüche 1 bis 10, wobei die Öffnungsgröße der Entlüftungsöffnung (108) innerhalb eines Bereichs von 1 mm² bis 8 mm², bevorzugt innerhalb eines Bereichs von 2 mm² bis 4 mm² und am meisten bevorzugt in einem Bereich zwischen 3 mm² und 4 mm² liegt.

12. Verfahren nach einem der Ansprüche 1 bis 11, wobei der Ausgleichspunkt, TBP, durch Auswählen einer Öffnungsgröße der Entlüftungsöffnung (108) zeitlich verschoben wird.

13. Verfahren nach einem der Ansprüche 1 bis 12, wobei die Entlüftungsöffnung (108) eine Klappe (162) umfasst, die einen Teil des Umfangs (164) der Entlüftungsöffnung (108) überragt.

14. Verfahren nach einem der Ansprüche 1 bis 12, wobei die Entlüftungsöffnung (108) eine einstellbare Öffnungsgröße (166) aufweist, wobei die einstellbare Öffnungsgröße (166) durch eine Abdeckung (106) bereitgestellt ist, die zumindest einen Teil aus einer dehnbaren Folie (170) umfasst, wobei die Entlüftungsöffnung (108) in der dehnbaren Folie (170) angeordnet ist und wobei sich die dehnbare Folie (170) als Reaktion auf einen Überdruck (120) ausdehnt, der durch den durch das Erhitzen (202) erzeugten Dampf verursacht wird.

15. System zum Herstellen eines Lebensmittelprodukts, wobei das System (300) Folgendes umfasst:
Erhitzungsmittel (107), die dazu konfiguriert sind, eine Lebensmittelverpackung (100), die das Lebensmittelprodukt (102) enthält, zu erhitzen (202), wobei die Lebensmittelverpackung (100) einen Behälter (104) und eine Abdeckung (106) umfasst, wobei das Erhitzen (202) einen Garprozess des Lebensmittelprodukts (102) einleitet oder fortsetzt und wobei der Garprozess eine Dampferzeugung (204) und eine Dampfkondensation (206) innerhalb der Lebensmittelverpackung (100) bewirkt; wobei die Abdeckung (106) eine Entlüftungsöffnung (108) zum Ablassen von überschüssigem Dampf, der durch die Dampferzeugung (204) verursacht wird, aufweist;
Etikettenanbringungsanordnung (152), die dazu konfiguriert ist, ein Etikett (126) auf der Abdeckung (106) anzubringen (210), sodass das Etikett (126) die Entlüftungsöffnung (108) abdeckt, wodurch das Lebensmittelprodukt (102) gegenüber der Umgebungsatmosphäre (128), die die Lebensmittelverpackung (100) umgibt, abgedichtet wird (212), **dadurch gekennzeichnet, dass** das Etikett (126) innerhalb eines Zeitfensters, TL, angebracht wird, das sich zeitlich zwischen einem Schwellenpunkt, TTP, an dem das Ablassen von überschüssigem Dampf durch die Entlüftungsöffnung (108) bei oder unter einem oberen Schwellenwert liegt, und einem Ausgleichspunkt, TBP, an dem die Dampferzeugung (204) durch die Dampfkondensation (206) ausgeglichen wird, erstreckt, sodass das Ablassen von überschüssigem Dampf durch die Entlüftungsöffnung (108) bei oder über einem unteren Schwellenwert erfolgt.

## Revendications

1. Procédé de préparation d'un produit alimentaire, le procédé (200) comprenant :
le chauffage (202) d'un emballage alimentaire (100) renfermant le produit alimentaire (102), l'emballage alimentaire (100) comprenant un récipient (104) et un couvercle (106), dans lequel le chauffage (202) démarre ou prolonge un processus de cuisson pour le produit alimentaire (102) et dans lequel le processus de cuisson provoque une génération de vapeur (204) et une condensation de vapeur (206) à l'intérieur de l'emballage alimentaire (100), le couvercle (106) ayant une ouverture de mise à l'air libre (108) pour la libération d'un excès de vapeur provoqué par la génération de vapeur (204) ;
la réduction (208) du chauffage (202) de l'emballage alimentaire (100), réduisant ainsi la génération de vapeur (204) ; et
l'application (210) d'une étiquette (126) pour sceller l'ouverture de mise à l'air libre (108), isolant (212) ainsi de manière étanche le produit alimentaire (102) de l'atmosphère ambiante (128) entourant l'emballage alimentaire (100), **caractérisé en ce que** l'étiquette (126) soit appliquée au cours d'une fenêtre de temps, TL, s'étendant chronologiquement entre un point seuil, TTP, au niveau duquel la libération de l'excès de vapeur à travers l'ouverture de mise à l'air libre (108) est inférieure ou égale à une valeur seuil maximale et un point d'équilibre TBP, au niveau duquel la génération de vapeur (204) est équilibrée par la condensation de vapeur (206) de sorte que la libération d'excès de vapeur à travers l'ouverture de mise à l'air libre (108) soit supérieure ou égale à une valeur seuil minimale.

2. Procédé selon la revendication 1, dans lequel l'ampleur de la génération de vapeur (204) dans le temps est déterminée sur la base d'une première fonction prédéfinie et dans lequel l'ampleur de la condensation de vapeur (206) dans le temps est déterminée sur la base d'une seconde fonction prédéfinie.

3. Procédé selon la revendication 2, dans lequel le point d'équilibre, TBP, se produit lorsque la première fonction prédéfinie et la seconde fonction prédéfinie ont une solution commune non nulle (115).

4. Procédé selon l'une quelconque des revendications 1 à 3, le procédé (200) comprenant en outre l'application (222) d'un processus de refroidissement (224) à l'emballage alimentaire (100) de sorte que la condensation de vapeur (206) soit augmentée, le processus de refroidissement (224) décalant ainsi le point d'équilibre, TBP, dans le temps pour qu'il se produise dans le temps à un point de refroidissement, TCP, qui est chronologiquement antérieur au point d'équilibre, TBP.

5. Procédé selon la revendication 4, lorsqu'elle est dépendante de la revendication 3, dans lequel le processus de refroidissement (224) influence la seconde fonction prédéterminée de sorte que la solution commune non nulle (115) avec la première fonction prédéterminée se produise dans le temps au point de refroidissement, TCP, qui est chronologiquement antérieur au point d'équilibre, TBP.

6. Procédé selon l'une quelconque des revendications 1 à 5, le procédé (200) comprenant en outre l'application (222) d'un processus de chauffage supplémentaire (226) à l'emballage alimentaire (100) avant l'application (210) de l'étiquette (126).

7. Procédé selon la revendication 6, dans lequel le processus de chauffage supplémentaire (226) décale le point d'équilibre, TBP, dans le temps pour qu'il se produise à un point de chauffage dans le temps, THP, qui est postérieur au point d'équilibre, TBP.

8. Procédé selon la revendication 6, lorsqu'elle est dépendante de la revendication 3, dans lequel le processus de chauffage supplémentaire (226) influence la première fonction prédéterminée de sorte que la solution commune non nulle (115) avec la seconde fonction prédéterminée se produise dans le temps à un point de chauffage, THP, qui est postérieur au point d'équilibre, TBP.

9. Procédé selon l'une quelconque des revendications 1 à 8, comprenant en outre :
la mesure (214), au moyen d'un dispositif de détection (156), de l'ampleur de la génération de vapeur dans le temps ; et la mesure (216), au moyen du dispositif de détection (156), de l'ampleur de la condensation de vapeur dans le temps.

10. Procédé selon la revendication 9, dans lequel le dispositif de détection (156) comprend :
un premier capteur (158) configuré pour surveiller l'ampleur de la génération de vapeur, et un second capteur (160) configuré pour surveiller l'ampleur de la condensation de vapeur.

11. Procédé selon l'une quelconque des revendications 1 à 10, dans lequel la taille d'ouverture de l'ouverture de mise à l'air libre (108) se situe dans une plage de 1 mm² à 8 mm², de préférence dans une plage de 2 mm² à 4 mm² et le plus préférablement dans une plage de 3 mm² à 4 mm².

12. Procédé selon l'une quelconque des revendications 1 à 11, dans lequel le point d'équilibre, TBP, est décalé dans le temps par une sélection d'une taille d'ouverture de l'ouverture de mise à l'air libre (108).

13. Procédé selon l'une quelconque des revendications 1 à 12, dans lequel l'ouverture de mise à l'air libre (108) comprend un rabat (162) surplombant une partie de la périphérie (164) de l'ouverture de mise à l'air libre (108).

14. Procédé selon l'une quelconque des revendications 1 à 12, dans lequel l'ouverture de mise à l'air libre (108) a une taille d'ouverture réglable (166), la taille d'ouverture réglable (166) étant assurée par un couvercle (106) comprenant au moins une partie de film extensible (170), dans lequel l'ouverture de mise à l'air libre (108) est agencée dans le film extensible (170), et dans lequel le film extensible (170) se dilate en réponse à une surpression (120) provoquée par la vapeur générée par le chauffage (202).

15. Système de préparation d'un produit alimentaire, le système (300) comprenant :
un moyen de chauffage (107) configuré pour chauffer (202) un emballage alimentaire (100) contenant le produit alimentaire (102), dans lequel l'emballage alimentaire (100) comprend un récipient (104) et un couvercle (106), dans lequel le chauffage (202) démarre ou prolonge un processus de cuisson du produit alimentaire (102), et dans lequel le processus de cuisson provoque une génération de vapeur (204) et une condensation de vapeur (206) à l'intérieur de l'emballage alimentaire (100) ; le couvercle (106) ayant une ouverture de mise à l'air libre (108) pour la libération d'un excès de vapeur provoqué par la génération de vapeur (204) ;
un dispositif d'application d'étiquette (152) configuré pour appliquer (210) une étiquette (126) sur le couvercle (106) de sorte que l'étiquette (126) recouvre l'ouverture de mise à l'air libre (108) isolant (212) ainsi de manière étanche le produit alimentaire (102) de l'atmosphère ambiante (128) entourant l'emballage alimentaire (100), **caractérisé en ce que** l'étiquette (126) soit appliquée au cours d'une fenêtre de temps, TL, s'étendant chronologiquement entre un point seuil, TTP, au niveau duquel la libération d'excès de vapeur à travers l'ouverture de mise à l'air libre (108) est inférieure ou égale à une valeur seuil maximale, et un point d'équilibre, TBP, au niveau duquel la génération de vapeur (204) est équilibrée par la condensation de vapeur (206) de sorte que la libération d'excès de vapeur à travers l'ouverture de mise à l'air libre (108) soit supérieure ou égale à une valeur seuil minimale.
